# EUROPEAN PATENT APPLICATION

(11) **EP 4 753 045 A1**
(43) Date of publication of application: **03.06.2026**
(21) Application number: 24897774.6
(22) Date of filing: 27.06.2024
(51) Int. Cl.: H01M 50/244, H01M 50/289

(54) **BATTERY MODULE**

(30) Priority: 01.12.2023 KR 20230172722
(71) Applicant: LG Energy Solution, Ltd., Seoul 07335 (KR)
(72) Inventor: CHIU, Chen-Min, Taipei City, 11494 (TW)
(74) Representative: Plasseraud IP
(86) International application number: PCT/KR2024/009032
(87) International publication number: WO 2025/116173

(57) **Abstract**

The present disclosure relates to a battery module including: a tube; a positioning element rotatably disposed inside the tube, having at least one positioning portion, and configured to rotate relative to the tube between a positioning state and a releasing state; and at least one battery assembly disposed inside the tube and having a groove. When the positioning element is in the positioning state, the positioning portion is positioned inside the groove to prevent the battery assembly from moving in an axial direction of the tube. When the positioning element is in the releasing state, at least one positioning portion leaves the groove.

## Description

### TECHNICAL FIELD

The present disclosure relates to a battery module and, more particularly, to a battery module in which battery assemblies are enclosed by a tube.

The present application claims priority to Korean Patent Application No. 10-2023-0172722 filed on December 01, 2023 in the Republic of Korea, the disclosures of which are incorporated herein by reference.

### BACKGROUND ART

Typically, an electric bike is equipped with a battery module to provide power to drive the bike. The battery module is configured as a plurality of battery assemblies stacked on each other, and a tube is used to enclose the battery assemblies. To prevent the battery assembly from unexpectedly displacing in the axial direction of the tube, the battery assembly is typically fixed by an adhesive method, which makes the assembly process of the battery module complicated and makes rework difficult.

### DISCLOSURE

### Technical Problem

The present disclosure has been designed to solve the problems of the related art, and therefore the present disclosure is directed to providing a battery module capable of stably fixing a battery assembly in a simple manner.

### Technical Solution

According to one aspect of the present disclosure, there is provided a battery module including: a tube; a positioning element rotatably disposed inside the tube, having at least one positioning portion, and configured to rotate relative to the tube between a positioning state and a releasing state; and at least one battery assembly disposed inside the tube and having a groove, wherein, when the positioning element is in the positioning state, the at least one positioning portion is positioned inside the groove to prevent the at least one battery assembly from moving in an axial direction of the tube.

In an embodiment of the present disclosure, when the positioning element is in the releasing state, the at least one positioning portion leaves the groove.

In an embodiment of the present disclosure, the groove has two opposing inner walls, and when the positioning element is in the positioning state, the at least one positioning portion is positioned between the two inner walls to hold the two inner walls in the axial direction.

In an embodiment of the present disclosure, the at least one battery assembly includes a plurality of battery assemblies, wherein the battery assemblies are sequentially stacked in the axial direction, wherein the at least one positioning portion includes a plurality of positioning portions, and wherein the positioning portions are disposed to be spaced apart from each other in the axial direction so as to respectively correspond to the grooves of the battery assemblies.

In an embodiment of the present disclosure, the positioning element includes a rotational axis portion, wherein the rotational axis portion is configured to rotate relative to the tube along a rotational axis line parallel to the axial direction, and wherein the at least one positioning portion is connected to the rotational axis portion.

In an embodiment of the present disclosure, the positioning element further includes a connection portion, and the connection portion extends from the rotational axis portion in a direction perpendicular to the rotational axis line and is connected to the at least one positioning portion.

In an embodiment of the present disclosure, the tube has a pivot groove, and the rotational axis portion is received inside the pivot groove to pivot along the rotational axis line.

In an embodiment of the present disclosure, the pivot groove has two stopping surfaces, and the two stopping surfaces are configured to limit a rotational angle range of the positioning element.

In an embodiment of the present disclosure, the rotational axis portion has an operating portion at an end thereof in the axial direction, and the operating portion receives a force to cause the rotational axis portion to rotate along the rotational axis line.

In an embodiment of the present disclosure, the at least one positioning portion has an arc surface, and when the positioning element is in the positioning state, the arc surface is directed to the groove.

In an embodiment of the present disclosure, the positioning element is made of metal.

### Advantageous Effects

In the battery module according to the present disclosure, a positioning element for positioning the battery assembly is further installed inside the tube. The user may rotate only the positioning element to prevent the battery assembly from moving in the axial direction of the tube using the positioning portion. Therefore, the battery module according to the present disclosure may stably fix the battery assembly in a simple method.

### DESCRIPTION OF DRAWINGS

FIG. 1 is a perspective view of a battery module according to an embodiment of the present disclosure.
FIG. 2 is an exploded view of the battery module shown in FIG. 1.
FIGS. 3a and 3b are diagrams respectively illustrating a releasing state and a positioning state of the positioning element shown in FIG. 2 on the battery assembly.
FIGS. 4a and 4b are plan views of the positioning element and the battery assembly in FIGS. 3a and 3b, respectively.
FIGS. 5a and 5b are cross-sectional views of the battery module taken along line I-I in FIGS. 4a and 4b, respectively.
FIG. 6 is a perspective view of the frame in FIG. 3a.
FIG. 7 is a front view of the positioning element in FIG. 2.
FIGS. 8a and 8b are diagrams illustrating an example of sequence in which the battery module in FIG. 1 is assembled.

### BEST MODE

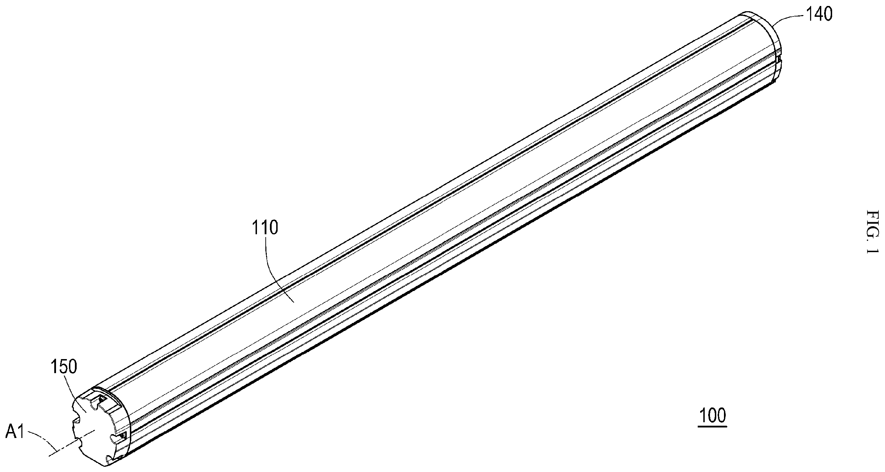

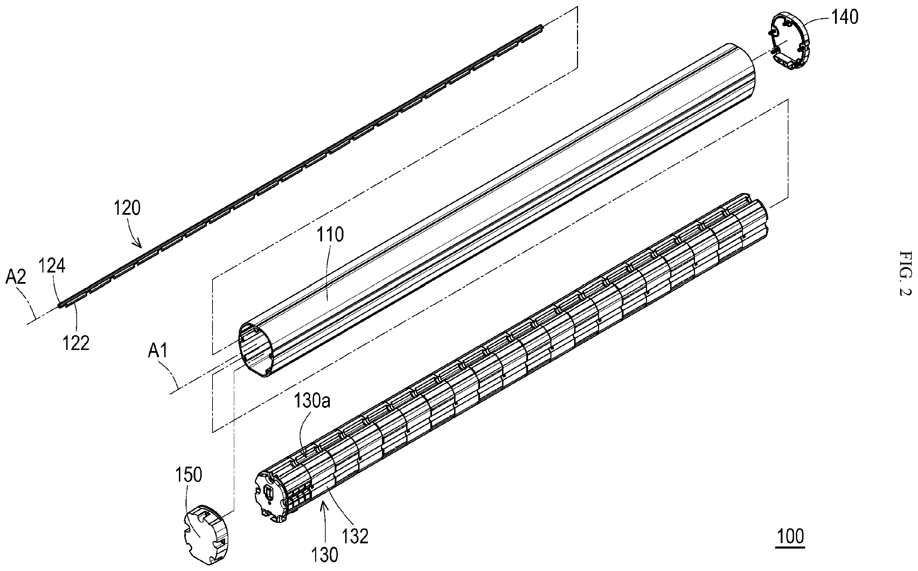

FIG. 1 is a perspective view of a battery module according to an embodiment of the present disclosure. FIG. 2 is an exploded view of the battery module shown in FIG. 1. Referring to FIGS. 1 and 2, the battery module 100 according to the present embodiment includes a tube 110, a positioning element 120, a plurality of battery assembles 130, and two covers 140 and 150. The positioning element 120 is rotatably disposed inside the tube 110 and has a plurality of positioning portions 122. The battery assemblies 130 are disposed inside the tube 110 so as to be sequentially stacked in the axial direction A1 of the tube 110, and each battery assembly 130 has a groove 130a. The positioning portions 122 of the positioning element 120 are arranged to be spaced apart from each other in the axial direction A1 of the tube 110 so as to correspond to the respective grooves 130a of the battery assemblies 130. Two covers 140 and 150 are respectively disposed at opposite ends of the tube 110 to cover the battery assembly 130.

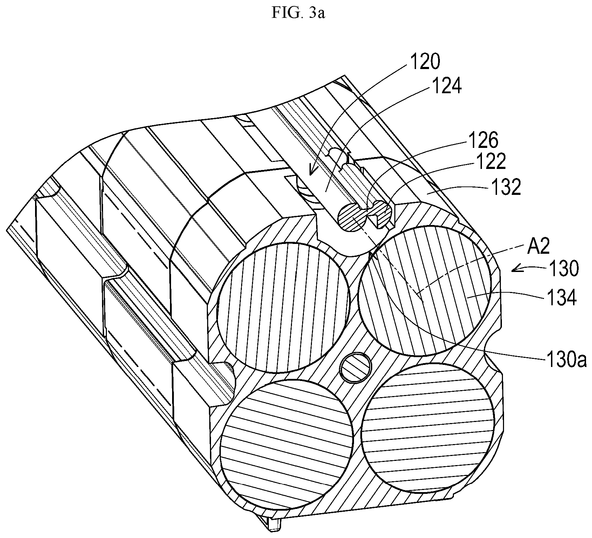

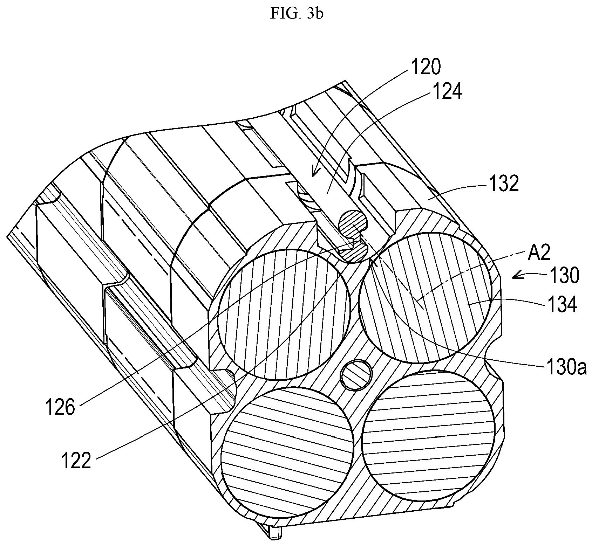

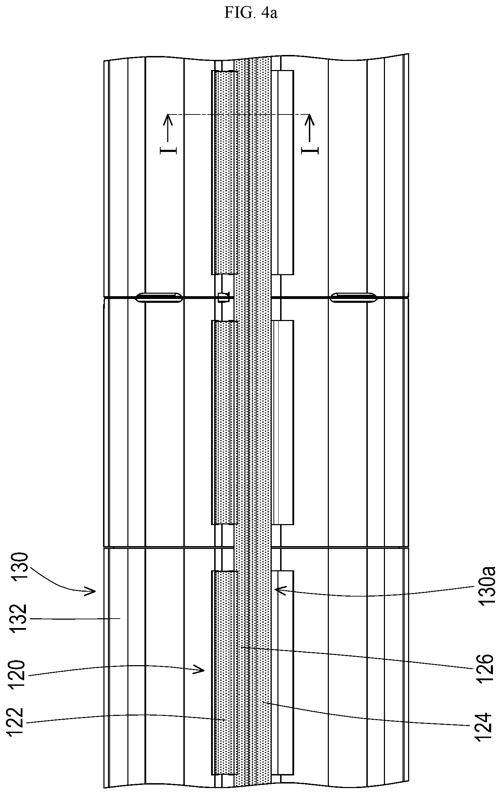

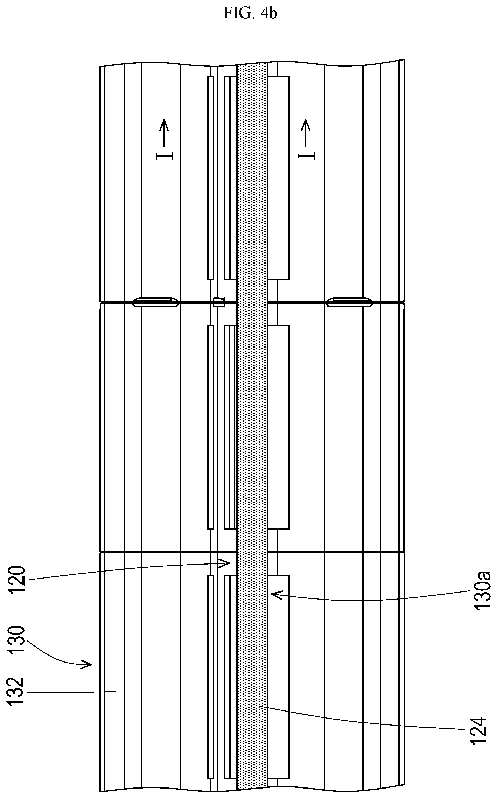

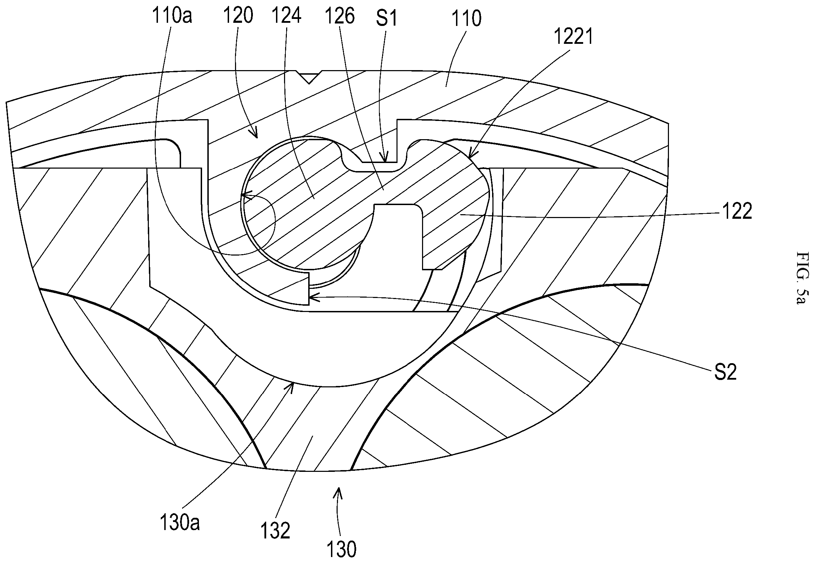

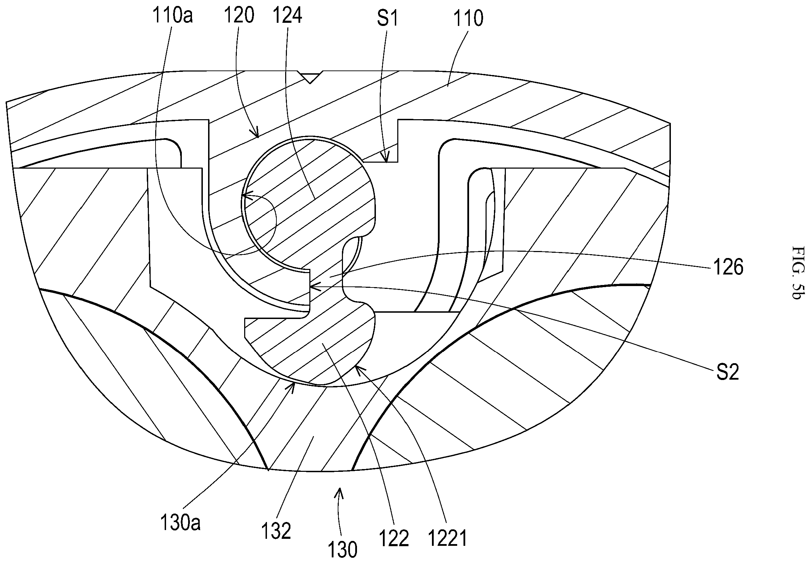

FIGS. 3a and 3b are diagrams respectively illustrating a releasing state and a positioning state of the positioning element shown in FIG. 2 on the battery assembly. FIGS. 4a and 4b are plan views of the positioning element and the battery assembly in FIGS. 3a and 3b, respectively. FIGS. 5a and 5b are cross-sectional views of the battery module taken along line I-I in FIGS. 4a and 4b, respectively. The positioning element 120 according to the present embodiment is configured to rotate relative to the tube 110 between the releasing state shown in FIGS. 3a, 4a, and 5a and the positioning state shown in FIGS. 3b, 4b, and 5b. When the positioning element 120 is in the positioning state, each positioning portion 122 is positioned in the corresponding groove 130a to prevent the battery assembly 130 from moving in the axial direction A1 of the tube 110. When the positioning element 120 is in the releasing state, each positioning portion 122 leaves the corresponding groove 130a, thereby releasing the battery assembly 130.

As described above, in the battery module 100 according to the present embodiment, the positioning element 120 is further provided inside the tube 110 to position the battery assembly 130. The user may merely rotate the positioning element 120 to prevent the battery assembly 130 from moving in the axial direction A1 of the tube 110 through the positioning portion 122. Therefore, the battery module 100 according to the present embodiment may stably fix the battery assembly 130 in a simple manner.

Referring to FIGS. 3a and 3b, in the present embodiment, each battery assembly 130 includes a frame 132 and a plurality of battery units 134. The battery unit 134 is disposed inside the frame 132, and the groove 130a is formed on the outer surface of the frame 132. In other embodiments, the battery assembly 130 may have various forms, and the present disclosure is not limited thereto.

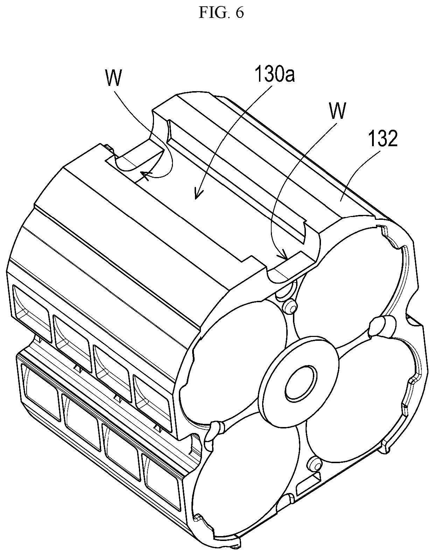

FIG. 6 is a perspective view of the frame in FIG. 3a. Referring to FIG. 6, the groove 130a according to the present embodiment has two opposing inner walls W. When the positioning element 120 is in the positioning state, the positioning portion 122 may be positioned between the two inner walls W and hold the two inner walls W in the axial direction A1 of the tube 110, thereby preventing the battery assembly 130 from moving in the axial direction A1 of the tube 110 as described above.

Referring to FIGS. 3a and 5a, specifically, the tube 110 according to the present embodiment has a pivot groove 110a. The positioning element 120 includes a rotational axis portion 124 and a connection portion 126. The rotational axis portion 124 is received in the pivot groove 110a to pivot along the rotational axis line A2 parallel to the axial direction A1, thereby rotating relative to the tube 110 along the rotational axis line A2, and the connection portion 126 extends from the rotational axis portion 124 in the direction perpendicular to the rotational axis line A2 to be connected to the positioning portion 122. That is, the positioning portion 122 is connected to the rotational axis portion 124 through the connection portion 126.

Furthermore, as shown in FIGS. 5a and 5b, the pivot groove 110a according to the present embodiment has two stopping surfaces S1 and S2, and the two stopping surfaces S1 and S2 stop the connection portion 126 to limit the rotational angle range of the positioning element 120. When the positioning element 120 is in the releasing state, the connection portion 126 is stopped by the stopping surface S1 as shown in FIG. 5a, and when the positioning element 120 is in the positioning state, the connection portion 126 is stopped by the stopping surface S2 as shown in FIG. 5b. Specifically, the rotational angle range of the positioning element 120 is limited to, for example, 90 degrees by two stopping surfaces S1 and S2, but the present disclosure is not limited thereto.

In the present embodiment, as shown in FIGS. 5a and 5b, the positioning portion 122 has an arc surface 1221, and when the positioning element 120 is in the positioning state, the arc surface 1221 of the positioning portion 122 is directed to the groove 130a of the battery assembly 130. That is, the arc surface 1221 faces the outer surface of the positioning element 120. During the rotation of the positioning element 120, the arc surface 1221 servers as a guide to allow the positioning element 120 to rotate smoothly.

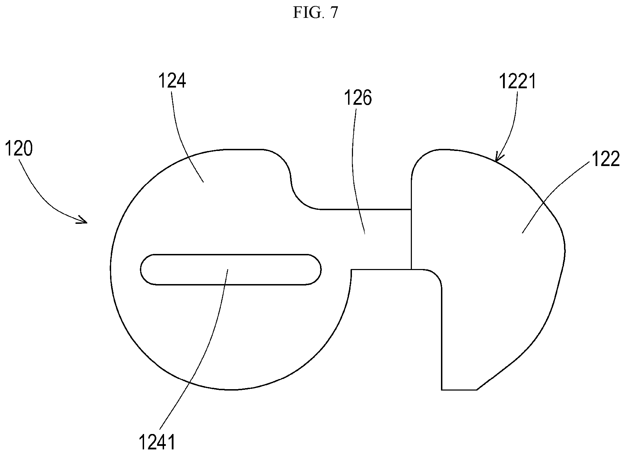

FIG. 7 is a front view of the positioning element in FIG. 2. Referring to FIG. 7, the rotational axis portion 124 according to the present embodiment has an operating portion 1241 at the end thereof in the axial direction A1, and force is applied to the operating portion 1241 so that the rotational axis portion 124 rotates along the rotational axis line A2 (see FIG. 2). Specifically, the operating portion 1241 may be a straight slot to be operated with a straight-type tool (such as a flat-head screwdriver), but the present disclosure is not limited thereto. The positioning element 120 according to the present embodiment is made of, for example, metal having good structural strength to stably position the battery assembly 130. According to other embodiments, the positioning element 120 may be made of various other materials, and the present disclosure is not limited thereto.

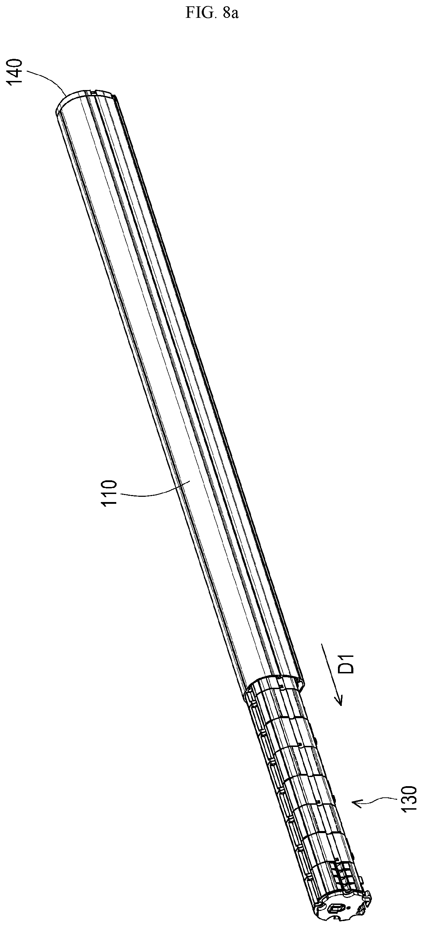

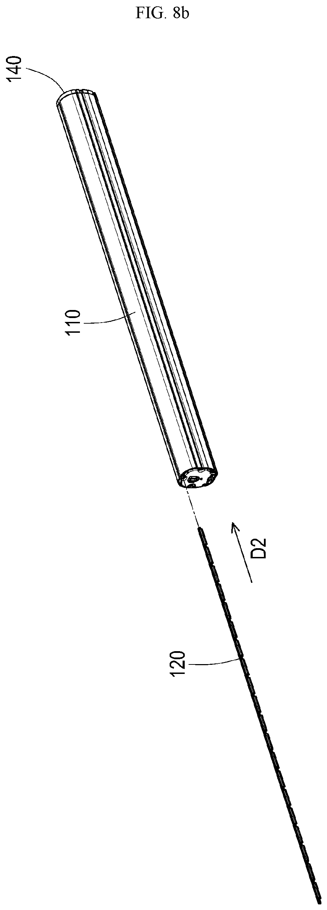

FIGS. 8a and 8b are diagrams illustrating an example of sequence in which the battery module in FIG. 1 is assembled. Hereinafter, the assembly method of the battery module 100 according to the present embodiment will be described. First, as shown in FIG. 8a, a tube 110 to which the cover 140 is coupled is installed in the direction D1 to enclose the sequentially stacked battery assemblies 130. Then, after the battery assembly 130 is completely positioned inside the tube 110, a positioning element 120 is inserted into the tube 110 in the D2 direction as shown in FIG. 8b. Next, as shown in FIGS. 5a and 5b, the positioning element 120 is rotated from the releasing state to the positioning state, and then, as shown in FIG. 1, the cover 150 is coupled to the tube 110, thereby completing the assembly of the battery module 100.

As described above, in the battery module according to the present disclosure, the positioning element for positioning the battery assembly is further installed inside the tube. The user may rotate only the positioning element to prevent the battery assembly from moving in the axial direction of the tube using the positioning portion. Therefore, the battery module according to the present disclosure may stably fix the battery assembly through a simple method.

### [Description of Reference numerals]

100: Battery module
110: Tube
110a: Pivot groove
120: Positioning element
122: Positioning portion
1221: Arc surface
124: Rotational axis portion
1241: Operating section
126: Connection portion
130: Battery assembly
130a: Groove
132: Frame
134: Battery unit
140, 150: Cover
A1: Axial direction
A2: Rotational axis line
D1, D2: Direction
S1, S2: Stopping surface
W: Inner wall

## Claims

1. A battery module comprising:
a tube;
a positioning element rotatably disposed inside the tube, having at least one positioning portion, and configured to rotate relative to the tube between a positioning state and a releasing state; and
at least one battery assembly disposed inside the tube and having a groove,
wherein, when the positioning element is in the positioning state, the at least one positioning portion is positioned inside the groove to prevent the at least one battery assembly from moving in an axial direction of the tube, and
wherein, when the positioning element is in the releasing state, the at least one positioning portion leaves the groove.

2. The battery module according to claim 1,
wherein the groove has two opposing inner walls, and
wherein, when the positioning element is in the positioning state, the at least one positioning portion is positioned between the two inner walls to hold the two inner walls in the axial direction.

3. The battery module according to claim 1,
wherein the at least one battery assembly comprises a plurality of battery assemblies, wherein the battery assemblies are sequentially stacked in the axial direction, wherein the at least one positioning portion comprises a plurality of positioning portions, and wherein the positioning portions are disposed to be spaced apart from each other in the axial direction so as to respectively correspond to the grooves of the battery assemblies.

4. The battery module according to claim 1,
wherein the positioning element comprises a rotational axis portion, wherein the rotational axis portion is configured to rotate relative to the tube along a rotational axis line parallel to the axial direction, and wherein the at least one positioning portion is connected to the rotational axis portion.

5. The battery module according to claim **4,**
wherein the positioning element further comprises a connection portion, and wherein the connection portion extends from the rotational axis portion in a direction perpendicular to the rotational axis line and is connected to the at least one positioning portion.

6. The battery module according to claim 4,
wherein the tube has a pivot groove, and wherein the rotational axis portion is received inside the pivot groove to pivot along the rotational axis line.

7. The battery module according to claim 6,
wherein the pivot groove has two stopping surfaces, and wherein the two stopping surfaces are configured to limit a rotational angle range of the positioning element.

8. The battery module according to claim 4,
wherein the rotational axis portion has an operating portion at an end thereof in the axial direction, and wherein the operating portion receives a force to cause the rotational axis portion to rotate along the rotational axis line.

9. The battery module according to claim 1,
wherein the at least one positioning portion has an arc surface, and when the positioning element is in the positioning state, the arc surface is directed to the groove.

10. The battery module according to claim 1,
wherein the positioning element is made of metal.
